# FASCICULE DE BREVET EUROPEEN

(11) **EP 2 313 440 B1**
(45) Date de publication et mention de la délivrance du brevet: **17.07.2013**
(21) Numéro de dépôt: 09740720.9
(22) Date de dépôt: 11.08.2009
(51) Int. Cl.: C08F 2/38

(54) **PROCEDE DE SYNTHESE DE COPOLYMERES AMPHIPHILES A GRADIENT ET SOLUBLES EN MILIEU ALCALIN**
VERFAHREN ZUR SYNTHESE VON AMPHIPHILEN GRADIENTENCOPOLYMEREN, DIE IN EINEM ALKALISCHEN MEDIUM LÖSLICH SIND
METHOD FOR SYNTHESIZING AMPHIPHILIC GRADIENT COPOLYMERS SOLUBLE IN AN ALKALINE MEDIUM

(30) Priorité: 12.08.2008 FR 0855548
(43) Date de publication de la demande: 27.04.2011
(73) Titulaire: Arkema France, 92700 Colombes (FR)
(72) Inventeur: COUVREUR, Laurence, F-75009 Paris (FR)
(86) Numéro de dépôt international: PCT/FR2009/051581
(87) Numéro de publication internationale: WO 2010/018344

(56) Documents cités:
- WO-A-2008/046156
- US-A1- 2005 256 253
- FRAL-SAISON, SAVE,BUI,CHARLEUX,MAGNET: "Emulsifier-free controlled free-radical emulsion polymerization of styrene via RAFT using dibenzyltrithiocarbonate as a chain transfer agent and acrylic acid as an ionogenic comonomer: batch and spontaneous phase inversion processes" MACROMOLECULES, vol. 39, no. 25, 11 novembre 2006 (2006-11-11), pages 8632-8638, XP007906684 Washington, USA cité dans la demande

## Description

La présente invention concerne un procédé de préparation de copolymères amphiphiles par Polymérisation Radicalaire Contrôlée, en présence d'un agent RAFT (Reversible Addition Fragmentation Transfer). Les copolymères de l'invention présentent des indices de polymolécularité faibles, des viscosités faibles en solution, et sont facilement solubles en milieu alcalin.

Dans de nombreuses utilisations, par exemple dispersion et broyage de pigments, stabilisation de latex, il est couramment fait appel à des copolymères, notamment à base de styrène, d'acide acrylique, etc. Dans les latex et peintures en particulier, il est en outre important que lesdits copolymères soient solubles dans les milieux alcalins.

Il existe aujourd'hui trois voies principales de synthèse de copolymères amphiphiles solubles en milieu alcalin : synthèse radicalaire « classique », synthèse radicalaire contrôlée (PRC), voie nitroxyde, et synthèse radicalaire contrôlée, voie RAFT.

Les copolymères amphiphiles obtenus par voie radicalaire « classique » ont généralement un indice de polymolécularité (IP) relativement élevé, comme indiqué par exemple dans la demande de brevet EP 0 697 422. Cette demande décrit une méthode de polymérisation en solution d'un copolymère de styrène (ou styrène substitué) avec un monomère possédant des fonctions carboxyliques, ainsi que l'utilisation des copolymères obtenus dans des solutions de nettoyage de surface. Ces copolymères possèdent des masses molaires en nombre (Mn) comprises entre 500 g/mol et 50000 g/mol et des indices de polymolécularité élevés (typiquement entre 1,8 et 7,5).

L'article paru dans Macromolecular Chemistry and Physics, (2003), 204(17), 2055-2063, décrit l'obtention de copolymères amphiphiles à partir de styrène et d'acide acrylique par polymérisation radicalaire contrôlée en présence de nitroxyde à 120°C dans le dioxane sous 2 bars avec un taux de solide de 40% environ. Ce procédé de synthèse met en oeuvre un solvant réactionnel toxique, et est réalisé sous pression, rendant ainsi difficile une production à l'échelon industriel.

Dans l'article Macromolecules (2007), 40(6), 1897-1903 est décrite la synthèse de copolymères statistiques amphiphiles par PRC, voie nitroxyde, à base d'acide méthacrylique et de styrène, pour des proportions en styrène inférieures à 8%, le styrène étant utilisé pour faciliter la polymérisation contrôlée de l'acide méthacrylique.

La polymérisation radicalaire contrôlée à base d'agent RAFT est déjà connue, notamment à partir des publications de demandes internationales WO 98/01478, WO 99/05099 et WO 99/31144 qui préconisent l'utilisation de certaines molécules soufrées de la famille des dithioesters, dithiocarbonates, dithiocarbamates et trithiocarbonates en tant qu'agents de transfert afin d'obtenir des (co)polymères à indices de polymolécularité étroits et décrivent le procédé de polymérisation appelé « polymérisation par addition-fragmentation réversible ».

L'article Macromolecules, (2007), 40(17), 6181-6189 décrit la synthèse de copolymères à blocs polystyrène-b-poly(acide acrylique) à partir de deux agents RAFT (de type trithiocarbonate dissymétrique). Ces synthèses sont réalisées dans le dioxane à 70°C à un taux de solide de l'ordre de 23% en poids. Cette technique n'est pas adaptable à une mise en oeuvre sur le plan industriel en raison de la toxicité du solvant réactionnel utilisé (dioxane) et du faible taux de solide observé dans le produit obtenu.

L'article J. Polym. Mat. Sc., (2003), 41, 684-698*,* décrit la synthèse « one pot » de copolymères à blocs poly(acide acrylate)-b-poly(acrylate de n-butyle) en utilisant le trithiocarbonate de dibenzyle ou un xanthate, en tant qu'agent de transfert RAFT, à des taux de solide de l'ordre de 35-40% en poids dans le méthanol à reflux pour le premier bloc de poly(acide acrylique). Les copolymères à blocs ainsi obtenus sont de compositions variables (20 à 50 motifs acide acrylique et 10 à 50 motifs acrylate de n-butyle) de masse moléculaire en nombre (Mn) inférieure à 9000 g/mol et caractérisés par un indice de polymolécularité compris entre 1,4 et 2,3. Cet article montre que la synthèse de copolymères amphiphiles par polymérisation radicalaire contrôlée, en utilisant des agents RAFT, est possible. Toutefois, seuls des copolymères à blocs à faible taux de solides ont été obtenus.

L'article Macromolecules, (2006), 39, 8632-8638 décrit la synthèse d'un copolymère à gradient acide acrylique/styrène par polymérisation radicalaire contrôlée, avec un agent RAFT, ledit copolymère étant ensuite directement utilisé en tant que semence pour la synthèse en émulsion de polystyrène ou de poly(acrylate de n-butyle). Le copolymère à gradient est obtenu en plusieurs étapes, dont une consiste en une addition d'eau sur le copolymère obtenu sous forme de gel, jusqu'à inversion de phase spontanée et obtention d'une solution translucide. La quantité d'eau ajoutée est importante puisque le taux de solide divulgué est de l'ordre de 12% en poids. En outre, le gel initial, ainsi que la solution translucide contiennent une quantité résiduelle en monomères élevée (environ 45% en poids dans le gel). Une étape supplémentaire de conversion des monomères résiduels à 60°C pendant 12 heures est nécessaire pour obtenir un taux de conversion de 94% en poids. Ce procédé en plusieurs étapes effectuées sur une longue période de temps n'est pas non plus approprié pour être utilisé à l'échelon industriel.

Il reste donc un besoin pour un procédé simple, facilement industrialisable, mettant en oeuvre des composés, en particulier des solvants réactionnels peu ou pas toxiques, notamment pour l'environnement.

Ainsi, un objectif de l'invention consiste à proposer un procédé à rendement élevé de synthèse de copolymères à gradients amphiphiles, solubles dans les milieux alcalins, dont l'indice de polymolécularité est faible, et avec un taux de solide élevé.

Un autre objectif de l'invention consiste à proposer un procédé de synthèse de copolymères à gradients amphiphiles, solubles dans les milieux alcalins, dont l'indice de polymolécularité est faible, et avec un taux de solide élevé, ledit procédé étant facilement industrialisable, faiblement consommateur d'énergie.

D'autres objectifs encore apparaîtront au cours de la description de l'invention qui suit. Ces objectifs sont atteints en totalité ou en partie grâce au procédé qui est maintenant décrit ci-dessous.

Ainsi, selon un premier aspect, la présente invention concerne un procédé de préparation d'un copolymère à gradient amphiphile par Polymérisation Radicalaire Contrôlée, en présence d'un agent RAFT (Reversible Addition Fragmentation Transfer) comprenant au moins les étapes suivantes :
a) préparation d'un milieu réactionnel comprenant au moins un monomère hydrophile polymérisable par voie radicalaire, au moins un monomère hydrophobe polymérisable par voie radicalaire, au moins un agent RAFT, au moins un amorceur, et éventuellement au moins un solvant ;
b) chauffage du milieu réactionnel sous agitation à une température comprise entre 40°C et 150°C, de préférence entre 50°C et 140°C, de préférence encore entre 60°C et 130°C ;
c) ajout éventuel d'une ou de plusieurs portions d'eau, en une quantité totale telle que le taux de solide, en copolymère amphiphile formé en fin de réaction, reste strictement supérieur à 40% en poids, qu'il y ait eu ou non un ajout d'eau au milieu de réaction ;
d) conduite de la réaction jusqu'à un taux de conversion des monomères supérieur à 80%, de préférence strictement supérieur à 80%, de préférence encore supérieur à 90%, et de manière encore plus préférée supérieur à 95% ; et
e) récupération du copolymère amphiphile, après élimination éventuelle des monomères résiduels et du ou des solvants éventuels.

De manière caractéristique, un seul milieu de réaction est formé pour y effectuer le procédé selon l'invention, et la polymérisation des monomères hydrophiles et des monomères hydrophobes se fait en une seule étape.

Dans le procédé de la présente invention, le monomère hydrophile polymérisable par voie radicalaire est choisi parmi les monomères suivants qui sont spontanément hydrophiles ou qu'une simple transformation (quaternarisation d'une amine ou neutralisation d'un acide) rend hydrophile dans la structure polymère :
- les acides carboxyliques éthyléniques tels que l'acide acrylique, l'acide méthacrylique, l'acide itaconique, l'acide fumarique, l'acide crotonique ;
- les acrylates et méthacrylates de polyéthylène glycol ou de glycol substitués ou non sur leur fonction terminale par des groupements alkyle, phosphates, phosphonates, sulfonate ;
- les amides des acides carboxyliques insaturés comme l'acrylamide ou le méthacrylamide et leur dérivés N substitués ;
- les acrylates et méthacrylates d'aminoalkyle, les méthacrylamides d'aminoalkyle ;
- les anhydrides carboxyliques porteurs d'une liaison vinylique tels que l'anhydride maléique ou l'anhydride fumarique ;
- les vinylamides tels que la vinylpyrrolidone ou le vinylacétamide ;
- les vinylamines tels que la vinylmorpholine ou la vinylamine ;
- la vinylpyridine ;
- les dérivés hydrophiles du styrène, tels que l'acide styrènesulfonique et ses sels ;
- et les mélanges de deux ou plusieurs d'entre eux.

Par « monomère hydrophile » on entend dans le cadre de l'invention des monomères qui forment des homopolymères solubles dans l'eau.

Les monomères hydrophobes sont généralement choisis parmi les monomères suivants :
- les dérivés styréniques, tels que le styrène, l'alpha-méthylstyrène, le *para-*méthylstyrène, le *tert*-butylstyrène ;
- les esters vinyliques, tels que l'acétate de vinyle, le propionate de vinyle, le butyrate de vinyle, le stéarate de vinyle, le benzoate de vinyle, les esters vinyliques de l'acide versatique,
- les (méth)acrylates d'alkyle en C₁-C₁₂ linéaires ou ramifies ;
- les (méth)acrylates de polyéthylène glycol ;
- l'acrylonitrile et le méthacrylonitrile ;
- les diènes tels que le butadiène ou l'isoprène ;
- et les mélanges de deux ou plusieurs d'entre eux.

Par « monomères hydrophobes » on entend ici des monomères qui forment des homopolymères insolubles dans l'eau. Le terme « soluble dans l'eau » utilisé ici en rapport avec un polymère signifie que le polymère est soluble dans l'eau à 25°C à une concentration massique d'au moins 0,1%, de préférence d'au moins 1%, encore plus préférentiellement d'au moins 5% et de manière la plus préférée d'au moins 15%.

Selon le procédé de la présente invention, on introduit dans un réacteur agité, contenant éventuellement au moins un solvant, le mélange des monomères à polymériser, un amorceur de polymérisation radicalaire et un agent RAFT de contrôle de la polymérisation. La proportion de monomère(s) hydrophile(s) et de monomère(s) hydrophobe(s) dans le milieu réactionnel de départ peut varier dans de grandes proportions, et en général la quantité de monomère(s) hydrophile(s) est comprise entre 5% et 95% en poids par rapport au poids total de monomère(s), de préférence compris entre 15% et 85%, de préférence encore entre 25% et 75%.

On préfère tout particulièrement mettre en oeuvre dans le procédé de l'invention les monomères hydrophiles choisis parmi acide acrylique, acide méthacrylique, styrène sulfonate de sodium, et (méth)acrylates de polyéthylèneglycol, et les monomères hydrophobes choisis parmi styrène, alpha-méthylstyrène, acrylate de n-butyle, acrylate d'éthyle, méthacrylate de méthyle.

Selon un mode de réalisation préféré de l'invention, on met en oeuvre des monomères hydrophiles (acide acrylique + Mᵢ) et des monomères hydrophobes (styrène + Mₒ), où Mᵢ représente un monomère hydrophile différent de l'acide acrylique et Mₒ représente un monomère hydrophobe différent du styrène, et où la proportion (acide acrylique + Mᵢ)/(styrène + Mₒ) est comprise entre 5/95 et 95/5 en poids, de préférence compris entre 15/85, de préférence encore entre 25/75. Selon une variante préférée, la proportion (acide acrylique + Mᵢ)/(styrène + Mₒ) est comprise entre 30/70 et 40/60 en poids. La quantité de Mᵢ peut varier de 0 à 99,9% en poids par rapport à la somme des monomères hydrophiles et la quantité de Mₒ peut varier de 0 à 99,9% en poids par rapport à la somme des monomères hydrophobes.

On préfère tout particulièrement mettre en oeuvre les monomères suivants :
- acide acrylique/styrène, en proportion 30/70 à 50/50 en poids ; ou
- acide acrylique/styrène/alpha-méthylstyrène, en proportion ⅓/⅓/⅓ en poids.

Le mélange de monomère(s), et plus généralement le milieu réactionnel peut être placé sous atmosphère de gaz inerte vis-à-vis de la polymérisation radicalaire, ledit gaz inerte pouvant être par exemple l'azote ou l'argon. La présence de gaz inerte n'est toutefois pas nécessaire.

Comme solvant du milieu réactionnel, celui-ci est de préférence un solvant des monomères de départ et avantageusement du copolymère qui sera formé. Parmi les solvants possibles, on peut citer l'eau, les alcools linéaires ou ramifiées, les glycols tels que le diéthylèneglycol, propylèneglycol monométhyléther et le dipropylèneglycol monométhyléther, le diméthylsulfoxyde, les esters alkyliques, en particulier les acétates d'alkyle, tels qu'entre autres les acétates de butyle ou d'éthyle, les cétones telles que la méthyléthylcétone (MEK), la méthyl-iso-butylcétone (MIBK), ainsi que les mélanges de deux ou plusieurs d'entre eux.

Le procédé de l'invention peut donc avantageusement être mis en oeuvre sans l'utilisation de solvants considérés nocifs ou toxiques pour l'environnement et/ou le monde animal, et qui sont couramment utilisés comme indiqué dans l'état de la technique, tels que le dioxane, la N-méthylpyrrolidone, le diméthylformamide, et autres. Selon un mode de réalisation préféré, le procédé selon l'invention est mis en oeuvre en l'absence de composés organiques volatiles (COV) toxiques et très toxiques ayant notamment les phrases de risques suivantes : R33, R39, R40, R45, R46, R49, R60 à R64.

L'amorceur de polymérisation utilisé dans le procédé de l'invention peut être tout type d'amorceur de polymérisation radicalaire, connu de l'homme du métier, et en particulier mais de manière non limitative, choisi parmi les amorceurs de type azoïque, peroxyde, red-ox.

Par amorceur de polymérisation, on entend classiquement une espèce chimique susceptible de produire des radicaux libres.

À titre d'exemples de composés azoïques, on peut citer le 2,2'-azobis(isobutyronitrile) (AIBN).

À titre d'exemples de composés peroxydes, on peut citer le peroxyacétate de *tert*-butyle, le peroxybenzoate de *tert*-butyle (TBPO), le peroxyde de dicumyle, le peroxyde de dibenzoyle.

À titre d'exemples de composés red-ox, on peut citer les persulfates (comme par exemple le persulfate de potassium, le persulfate de sodium et le persulfate d'ammonium), éventuellement en association avec un sel de métabisulfite, par exemple le métabisulfite de sodium.

Généralement, l'amorceur de polymérisation est ajouté en une quantité allant de 1% à 50% en poids par rapport à la masse d'agent de transfert RAFT préférentiellement de 2% à 35% et encore plus préférentiellement de 3% à 20%, par exemple environ 5%.

L'agent de transfert RAFT mis en oeuvre dans le procédé de la présente invention peut être de tout type connu de l'homme du métier. On préfère les agents de transferts de chaîne RAFT répondant à la formule suivante : 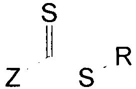 où R est choisi parmi -CH₂R¹, -CHR¹R'¹ et -CR¹R'¹R"¹, avec R¹, R'¹ et R"¹, identiques ou différents, représentant chacun indépendamment l'un de l'autre, un groupe choisi parmi alkyle éventuellement substitué, un cycle carbocyclique ou hétérocyclique saturé, non saturé ou aromatique, éventuellement substitué, alkylthio éventuellement substitué, groupe alkoxy éventuellement substitué, dialkylamino éventuellement substitué, groupe organométallique, acyle, acyloxy, carboxy (et ses esters et/ou sels), acide sulfonique (et ses sels et ou sulfonates), alkoxy- ou aryloxy-carbonyle, et chaîne polymère préparée par un mécanisme de polymérisation quelconque ;
où Z est choisi parmi hydrogène, halogène (chlore, brome, iode), alkyle éventuellement substitué, aryle éventuellement substitué, hétérocycle éventuellement substitué, -SR², alkoxycarbonyle éventuellement substitué, aryloxycarbonyle éventuellement substitué (-COOR²), carboxy (-COOH), acyloxy (-OCOR²) éventuellement substitué, carbamoyle (-CONHR², -CONR²R³) éventuellement substitué, cyano (-CN), dialkyl- ou diarylphosphonato [-P(=O)OR²₂], dialkyl- ou diaryl-phosphinato [-P(=O)R²₂], chaîne polymère préparée par un mécanisme de polymérisation quelconque, groupe -OR², et groupe -NR²R³,
où R² et R³, identiques ou différents, sont sélectionnés dans le groupe constitué de alkyle en C₁ à C₁₈, alcényle en C₂ à C₁₈, aryle C₆ à C₁₈, hétérocyclyle, aralkyle, alkaryle, chacun de ces groupes pouvant être éventuellement substitués et dans lesquels les substituants sont choisis parmi époxy, hydroxy, alkoxy, acyle, acyloxy, carboxy (et ses esters et/ou sels), acide sulfonique (et ses sels et ou sulfonates), alkoxy- ou aryloxycarbonyle, isocyanato, cyano, silyle, halo et dialkylamino.

Le groupement R tel que défini ci-dessus peut être libéré sous la forme d'un radical R•, qui amorce la polymérisation par radicaux libres.

Parmi les agents de transfert de chaîne, on peut notamment citer les dithioesters (composés comportant au moins un motif -C(=S)S-), les dithiocarbonates ou xanthates (composés comportant au moins un motif -O-C(=S)S-), les dithiocarbamates (composés comportant au moins un motif -N-C(=S)S-) et les trithiocarbonates (composés comportant au moins un motif -S-C(=S)S-).

Des dithioesters pouvant être avantageusement utilisés dans le cadre de l'invention sont ceux répondant à la formule (I) suivante : 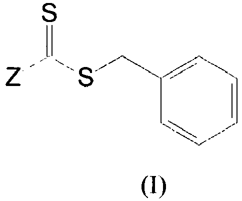 dans laquelle Z représente un groupe choisi parmi -C₆H₅, -CH₃, un groupe pyrrole, - OC₆F₅, un groupe pyrrolidinone, -OC₆H₅, -OC₂H₅, -N(C₂H₅)₂, et avantageusement le groupe -S-CH₂-C₆H₅ (trithiocarbonate de dibenzyle ou DBTTC) de formule (II) suivante :

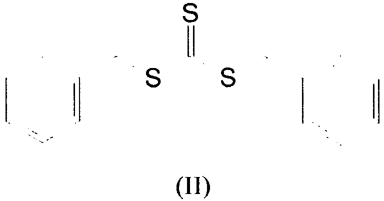

On préfère tout particulièrement les agents de transfert de chaîne tels que définis plus haut et qui sont liposolubles, et peu ou pas hydrosolubles. L'agent de transfert de formule (II) répond tout particulièrement à ces conditions.

S'agissant d'agents de transfert de chaîne, sont tout particulièrement appropriés le DBTTC (CAS no. 26504-29-0) et ses dérivés ou encore le l'acide (2,2' carbonothioylbis(thio)) propanoique (CAS no. 6332-91-8) ou ses sels, notamment le sel de sodium (CAS no. 864970-33-2). L'agent RAFT utilisé de manière tout à fait préférée est le trithiocarbonate de dibenzyle (DBTTC) et ses dérivés.

Les quantités d'agents de transfert de chaîne mis en oeuvre vont en général de 0,1 à 10% en poids, de préférence de 0,1 à 5% en poids, particulièrement de 0,1 à 3% en poids, par rapport à 100% en poids de monomère(s).

La réaction est conduite à une température comprise entre 40°C et 150°C, de préférence entre 50°C et 140°C, et de préférence encore entre 60°C et 130°C. La réaction peut être conduite à pression atmosphérique, ou sous légère pression (telle que par exemple à reflux d'un ou de plusieurs des composés présents dans le milieu réactionnel, notamment reflux du ou des solvant(s)).

Il est possible, au cours de la réaction, d'ajouter de l'eau au milieu réactionnel, par exemple dans le cas où l'on souhaite obtenir un produit fini qui est une dispersion aqueuse de copolymère amphiphile. L'addition d'eau peut être effectuée en une fois, ou en deux ou plusieurs portions.

La quantité totale d'eau ajoutée peut varier dans de grandes proportions, mais en général on préfère que la quantité d'eau ajoutée soit telle que le taux de solide théorique en copolymère amphiphile formé en fin de réaction soit strictement supérieur à 40% en poids. Qu'il y ait eu ou non ajout d'eau au milieu de réaction, il est impératif que le taux de solide dans la solution de copolymère amphiphile obtenu comme produit final reste supérieur à 40% en poids.

Il peut également être envisagé l'addition d'une solution aqueuse dont le pH soit supérieur à 7, avantageusement compris entre 8 et 10, par exemple une solution aqueuse d'ammoniaque ou d'hydroxyde de sodium ou de potassium. L'addition d'une solution aqueuse basique est notamment préférée lorsqu'un ou plusieurs des monomères comporte(nt) des fonctions acides, en particulier acides carboxyliques.

Après l'ajout éventuel d'eau, la réaction est poursuivie, en présence ou en l'absence d'eau, jusqu'à un taux de conversion des monomères supérieur à 80%, de préférence strictement supérieur à 80%, de préférence encore supérieur à 90%, et de manière tout à fait préférée supérieur à 95%, en d'autres termes obtenir le taux de conversion le plus élevé possible pour des raisons évidentes à la fois économiques et de facilité de mise en oeuvre industrielle (faible quantité de recyclage des produits de départ non convertis et faibles quantités de solvant(s), etc.)

Le taux de conversion peut être mesuré dans le milieu réactionnel par tout moyen connu en soi, tel que RMN, chromatographie phase gazeuse, gravimétrie après éventuelle dilution, et autres.

À l'issue de la réaction, le copolymère amphiphile peut être isolé selon les méthodes classiques connues de l'homme du métier. Il est possible de récupérer les monomères n'ayant pas réagi ainsi que l'éventuel solvant et des les recycler, si on le souhaite.

Selon une variante, il peut être envisagé, à l'issue de la réaction, d'ajouter une quantité supplémentaire d'amorceur, en association ou non avec un agent de transfert de chaîne, tel que, mais non nécessairement, identique à l'agent de transfert utilisé dans les étapes précédentes, de manière à convertir une partie ou la totalité du ou des monomère(s) résiduel(s).

Dans le cas où la réaction a été réalisée avec ajout d'eau ou d'une solution aqueuse basique, le copolymère est obtenu et récupéré sous forme de dispersion aqueuse et peut être utilisé tel quel.

Du fait de la copolymérisation radicalaire en présence d'agent RAFT comprenant un groupement thiocarbonylthio (-S-C(=S)-), ce groupement est également présent dans les copolymères amphiphiles formés. La présence de tels groupements permet notamment d'utiliser les copolymères amphiphiles pour la synthèse de copolymères à blocs.

Ainsi, l'invention s'étend également à un procédé de préparation de copolymères à blocs dont au moins un des blocs est un copolymère de l'invention décrite ci-dessus n'ayant pas subi de post-traitement, et l'autre bloc résulte de la polymérisation de tout type monomère(s), notamment choisi(s) parmi : (méth)acrylate d'alkyle, styrène et dérivés, (méth)acrylates fonctionnels avec fonctionnalité acide, anhydride, hydroxy, amine, poly(éthylène glycol), (poly-éthylène oxyde), seul(s) ou en mélange de deux ou plusieurs d'entre eux.

Ledit procédé se caractérise par l'utilisation d'au moins un copolymère de l'invention décrite ci-dessus n'ayant pas subi de post-traitement, pour la synthèse d'un copolymère à blocs, le ou les autre(s) bloc(s) résultant de la polymérisation d'un ou plusieurs des monomères listés ci-dessus.

Dans certaines applications toutefois, la présence des groupements thiocarbonylthio dans les copolymères n'est pas souhaitable en raison de leur réactivité envers diverses sources de radicaux (température, UV, oxygène de l'air, humidité, etc.).

Ainsi, et selon une autre variante, avant ou après la récupération du copolymère amphiphile, il peut être envisagé de faire subir un post-traitement audit copolymère, ledit post-traitement ayant pour effet de modifier les groupements trithiocarbonyle dans le but d'obtenir des produits plus stables vis-à-vis des sources de radicaux. De tels post-traitements sont bien connus de l'homme du métier et sont par exemple décrits dans les demandes de brevets WO 2002/090397, US 6 919 409 et WO 2005/113612.

De tels post-traitements peuvent également être envisagés lorsque l'on souhaite améliorer les odeurs soufrées des copolymères amphiphiles directement obtenus à l'issue de la réaction.

En remplacement ou en sus d'un tel post-traitement, il peut être envisagé d'ajouter un ou plusieurs masquants d'odeurs ou odorisants aux copolymères amphiphiles. De tels masquants ou odorisants peuvent éventuellement être ajoutés au cours de la réaction de copolymérisation, pour autant qu'ils soient inertes vis-à-vis de ladite réaction. Ainsi, un ou plusieurs masquants d'odeurs ou agents odorisants peuvent être ajoutés pendant la réaction de copolymérisation, ou bien après ladite réaction, ou encore pendant et après ladite réaction de copolymérisation.

D'autres additifs peuvent bien entendu être ajoutés aux copolymères amphiphiles obtenus selon le procédé de la présente invention, et parmi ceux-ci, on peut citer, de manière non limitative, des pigments, anti-oxydants, stabilisants, et autres, ainsi que leurs mélanges.

Le procédé selon la présente invention permet l'obtention de copolymères amphiphiles à basse température (typiquement inférieure à 150°C), sous pression atmosphérique, ou légère surpression, selon différents modes de synthèses (synthèse « masse » (sans solvant), en milieu solvant, en milieu aqueux ou encore en milieu hydro-organique (solvant + eau)). Les copolymères amphiphiles ainsi obtenus présentent des caractéristiques tout à fait intéressantes, et notamment d'être synthétisés à des taux de conversion élevés et avec des masses molaires contrôlées, tout en présentant des indices de polymolécularité faibles. L'indice de polymolécularité (IP) est défini par le rapport Mw/Mn (masse molaire en poids/masse molaire en nombre) qui est déterminé selon les méthodes classiques connues de l'homme de l'art, et notamment par chromatographie d'exclusion stérique (SEC).

Les copolymères amphiphiles obtenus selon le procédé de la présente invention présentent ainsi des IP faibles, typiquement compris entre 1,2 et 2, le plus souvent entre 1,2 et 1,8, le plus généralement entre 1,30 et 1,55.

Les masses molaires en poids (Mw) des copolymères amphiphiles du procédé de l'invention sont généralement comprises entre 1000 g/mol et 40000 g/mol, de préférence entre 2000 g/mol et 30000 g/mol, de manière tout à fait préférée entre 3000 g/mol et 20000 g/mol.

Grâce aux caractéristiques définies ci-dessus, les copolymères amphiphiles obtenus selon le procédé de la présente invention présentent des viscosités, notamment en solution, inférieures aux copolymères amphiphiles disponibles dans le commerce et obtenu selon des procédés par voie radicalaire classique.

Les copolymères amphiphiles obtenus selon le procédé de la présente invention trouvent leurs utilisations dans divers domaines d'applications, et notamment en tant que tensioactifs pour stabiliser des émulsions, ou en tant que dispersants de pigments et/ou de charges minérales, ou encore comme agents d'aide au broyage de charges minérales, qui entrent dans la préparation de formulations pour peintures, encres, et autres formulations de revêtement.

Du fait de leur IP faible, les copolymères amphiphiles peuvent être utilisés en quantités inférieures par rapport aux quantités utilisées avec des copolymères similaires présentant des IP plus élevées.

La présente invention est maintenant illustrée au moyen des exemples qui suivent et qui n'ont pas pour but de limiter l'invention.

### Exempte 1: Copolymérisation du styrène et de l'acide acrylique en solution en présence de DBTTC, en milieu solvant

Dans un réacteur de polymérisation équipé d'un moteur d'agitation à vitesse variable, des entrées pour l'introduction de réactifs, de piquage pour l'introduction de gaz inertes permettant de chasser l'oxygène, comme l'azote, et de sondes de mesure (e.g., de température), d'un système de condensation de vapeurs avec reflux, d'une double enveloppe permettant de chauffer/refroidir le contenu du réacteur grâce à la circulation dans celle-ci d'un fluide caloporteur, on introduit 210 g d'acide acrylique (soit 2,91 moles), 490 g de styrène (soit 4,77 moles), 1,045 g d'azo-bis-iso-butyronitrile (soit 0,006 moles), 18,48 g de trithiocarbonate de dibenzyle (soit 0,064 moles) et 124 g (soit 1,23 moles) de methyl-*iso*-butylcétone.

Le milieu réactionnel est porté à 80°C et cette température est maintenue par régulation thermique pendant quelques minutes puis divers paliers de température permettent d'atteindre une valeur de 125°C dans le réacteur en fin de polymérisation.

Au bout de 7 heures, une conversion proche de 100% est atteinte et le milieu réactionnel est soutiré du réacteur. Le taux de conversion est calculé de la manière suivante : on suit la conversion par prélèvements refroidis immédiatement dans la glace et contrôle par extrait sec avec thermobalance à 140°C (Mettler Toledo HB43). La thermobalance permet d'accéder à la quantité de solide contenu dans l'échantillon prélevé et donc de remonter au taux de solide du dit échantillon [taux de solide au temps t = (masse initiale - masse finale)/masse initiale]. Le contrôle sur le prélèvement final est doublé si nécessaire par analyse GC (chromatographie en phase gazeuse). La conversion massique = (1- Taux de solide à t) / Taux de solide théorique (taux de solide en polymère si la totalité des monomères est convertie).

Les masses moléculaires du polymère en équivalent polystyrène (PS) déterminées par SEC sont de 9000 g/mol pour la masse molaire moyenne en nombre (Mn) et de 13200 g/mol pour la masse molaire moyenne en poids (Mw). L'indice de polymolécularité est de 1,47. Avant de réaliser l'analyse par SEC et comme des polymères amphiphiles ne sont pas analysables par des méthodes standards, les fonctions acides ont été modifiées en fonction ester méthyliques par utilisation de trimethylsilyldiazomethane en solution. Les polymères ainsi modifiés sont donc totalement lipophiles et analysables dans des conditions classiques de SEC. Les polymères séchés sont analysés par chromatographie d'exclusion stérique (SEC) dans le THF à 40°C à 1 g/l avec un débit de 1 mL/min sur un jeu de 2 colonnes Plgel MIXED B (30 cm) avec un détecteur réfractométrique et UV. Les résultats des masses molaires et distribution sont exprimés en équivalents polystyrène (PS).

### Exemple 2 : Polymérisation du styrène et de l'acide acrylique en présence de DBTTC, en solution

Le réacteur utilisé ainsi que le mode opératoire sont identiques à ceux cités dans l'exemple 1.

On introduit dans le réacteur 150 g d'acide acrylique (soit 2,08 moles), 350 g de styrène (soit 3,36 moles), 0,68 g de Luperox® DI (Arkema) (soit 0,005 moles), 13,20 g de trithiocarbonate de dibenzyle (soit 0,045 moles) et 91 g (soit 0,91 moles) de methyl-*iso-*butylcétone. Le milieu réactionnel est porté à 80°C et cette température est maintenue par régulation thermique pendant quelques minutes puis divers paliers de température permettent d'atteindre une valeur de 130°C dans le réacteur en fin de polymérisation.

Au bout de 6 heures, une conversion proche de 100% est atteinte et le milieu réactionnel est soutiré du réacteur.

Les masses moléculaires du polymère en équivalent polystyrène (PS) déterminées par SEC sont de 8700 g/mol pour la masse molaire moyenne en nombre (Mn) et de 13200 g/mol pour la masse molaire moyenne en poids (Mw). L'indice de polymolécularité est de 1,51.

### Exemple 3 : Polymérisation du styrène et de l'acide acrylique en présence de disel de sodium de l'acide (2,2' carbonothioylbis(thio)) propanoique, en solution

Le réacteur utilisé ainsi que le mode opératoire sont identiques à ceux cités dans les exemples 1 et 2.

On introduit dans le réacteur 150 g d'acide acrylique (soit 2,08 moles), 277 g de styrène (soit 2,66 moles), 0,58 g de Luperox^{®} DI (Arkema) (soit 0,004 moles), 21,50 g de disel de sodium de l'acide (2,2' carbonothioylbis(thio)) propanoique (soit 0,074 moles) et 378 g (soit 0,91 moles) de methyl-ethyl-cétone. Le milieu réactionnel est porté à 120°C et cette température est maintenue par régulation thermique. Au bout de 7 heures, une conversion proche de 83% est atteinte et le milieu réactionnel est soutiré du réacteur.

Les masses moléculaires du polymère en équivalent polystyrène (PS) déterminées par SEC sont de 7350 g/mol pour la masse molaire moyenne en nombre (Mn) et de 10420 g/mol pour la masse molaire moyenne en poids (Mw). L'indice de polymolécularité est de 1,42. Les données relatives aux Exemples 1, 2 et 3 sont regroupées dans le Tableau 1 ci-dessous :

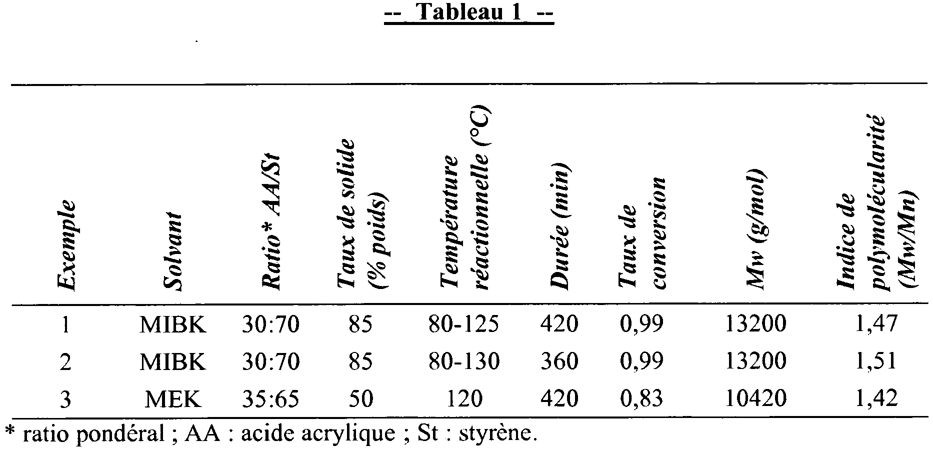

### Exempte 4 : Polymérisation du styrène et de l'acide acrylique en présence de DBTTC, procédé successif masse puis dispersion aqueuse

Le réacteur utilisé ainsi que le mode opératoire sont identiques à ceux cités dans l'exemple 1. L'exemple 4a est conduit selon les données suivantes :

On introduit 72 g d'acide acrylique (soit 1 mole), 168 g de styrène (soit 1,61 moles), 0,359 g d'azo-bis-isobutyronitrile (soit 0,002 moles) et 6,35 g de trithiocarbonate de dibenzyle (soit 0,020 moles). Cette solution est agitée à 250 tours/min à 75°C jusqu'à l'obtention d'une conversion de 45%. Quand cette conversion est atteinte, 240 g d'eau préalablement chauffée est ajoutée dans le réacteur sous une agitation de 500 tours/minute.

Dans le même temps, on enclenche une rampe de température sur 60 minutes afin d'obtenir une température de 90°C. Après 3 heures de polymérisation, on ajoute 480 g d'une solution aqueuse d'ammoniaque (pH = 10). Cette dispersion est agitée 5 heures supplémentaires et une conversion de 90% est ainsi obtenue.

Une étape supplémentaire de cuisson par ajout d'un amorceur (0,08 g de PRS) permet, sur 2 heures de polymérisation supplémentaire, d'obtenir une conversion supérieure à 95%.

De manière similaire, on réalise les exemples 3b à 3e. Les durées réactionnelles, températures et quantités d'eau ajoutées sont présentées dans le Tableau 2 ci-dessous :

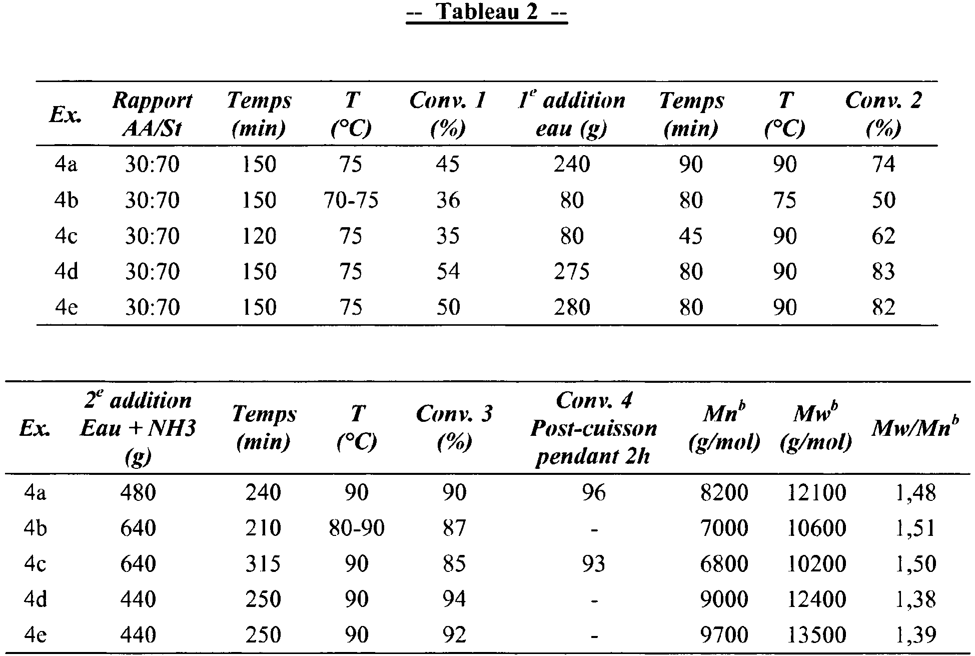

### Exemple 5 : Comparaison du comportement des copolymères en solution alcaline

On réalise une étude comparative, par rapport au produit commercial Joncryl^{®} 678, des solubilités en solution alcaline, et des viscosités observées.

Pour ce faire, on dilue de l'ammoniaque en solution à 28% Normapur avec de l'eau distillée jusqu'à atteindre un pH de 12. Dans un flacon en verre, on pèse 3 g d'un échantillon de copolymère sec à tester (selon l'invention ou produit commercial Joncryl^{®} 678), puis sont ajoutés 7 g de la solution aqueuse d'ammoniaque à pH=12 préparée précédemment. Le taux de solide (SC) est de 30%. L'ensemble est placé sous forte agitation à température ambiante jusqu'à solubilisation complète du polymère, après quoi le pH est mesuré (à l'aide de papier pH).

La mesure de viscosité est réalisée sur un viscosimètre Brookfield type LVTCP dont la température est régulée par un bain Haake D8. Suivant la viscosité apparente de ces solutions, on utilise un des deux disques suivants :
- CP41 pour des viscosités allant de 19,2 à 3840 cP (échantillon de 2 mL).
- CP51 pour des viscosités allant de 80,9 à 16180 cP (échantillon de 0,5 mL).

Les résultats sont rassemblés dans le Tableau 3 suivant :

**-- Tableau 3 --**

| ***Ex.*** | ***Composition^{a}*** | ***Mw (g.mol⁻¹)^{b}*** | ***Mw*/*Mn^{b}*** | ***Neutralisation ammoniaque (SC** = *30%)*** | ***Viscosité^{c}** à* ***25°C (SC** = *30%)*** | ***Viscosité^{c} à 50°C (SC** = *30%)*** |
|---|---|---|---|---|---|---|
| Joncryl^{®} 678 | St/AMS:AA 1:1:1 | 9300 | 2,44 | Seulement à 50°C lorsque pH > 9,5 | ≈4000 cP | ≈500 cP |
| 1 | St/AA 2:1 | 8900 | 1,41 | RT** < 1h | ≈1500 cP | ≈130 cP |
| 2 | St/AA 2:1 | 13200 | 1,51 | RT** < 1h | ≈3400 cP | ≈500 cP |
| 4b | St/AA 2:1 | 10600 | 1,51 | immédiate | ≈150 cP | ≈20 cP |
| 4c | St/AA 2:1 | 10200 | 1,50 | immédiate | ≈2200 cP | ≈250 cP |

| | | | | | | |
|---|---|---|---|---|---|---|
| a : St : Styrène, AMS : alpha-méthylstyrène, AA : acide acrylique ; b : calibrage SEC/PS après méthylation ; c : viscosité de la solution ; * SC = Extrait sec ; ** RT = Température ambiante | | | | | | |

## Revendications

1. Procédé de préparation d'un copolymère à gradient amphiphile par Polymérisation Radicalaire Contrôlée, en présence d'un agent RAFT (Réversible Addition Fragmentation Transfer) comprenant au moins les étapes suivantes :
a) préparation d'un milieu réactionnel comprenant au moins un monomère hydrophile polymérisable par voie radicalaire, au moins un monomère hydrophobe polymérisable par voie radicalaire, au moins un agent RAFT, au moins un amorceur, et éventuellement au moins un solvant ;
b) chauffage du milieu réactionnel sous agitation à une température comprise entre 40°C et 150°C;
c) ajout éventuel d'une ou de plusieurs portions d'eau, en une quantité totale telle que le taux de solide, en copolymère amphiphile formé en fin de réaction, reste strictement supérieur à 40% en poids ;
d) conduite de la réaction jusqu'à un taux de conversion des monomères supérieur à 80% ; et
e) récupération du copolymère amphiphile, après élimination éventuelle des monomères résiduels et du ou des solvants éventuels.

2. Procédé selon la revendication 1, dans lequel le monomère hydrophile polymérisable par voie radicalaire est choisi parmi les monomères suivants, spontanément hydrophiles ou qu'une simple transformation telle que la quaternarisation d'une amine ou la neutralisation d'un acide rend hydrophile dans la structure polymère :
- les acides carboxyliques éthyléniques tels que l'acide acrylique, l'acide méthacrylique, l'acide itaconique, l'acide fumarique, l'acide crotonique ;
- les acrylates et méthacrylates de polyéthylène glycol ou de glycol substitués ou non sur leur fonction terminale par des groupements alkyle, phosphates, phosphonates, sulfonate ;
- les amides des acides carboxyliques insaturés comme l'acrylamide ou le méthacrylamide et leur dérivés N substitués ;
- les acrylates et méthacrylates d'aminoalkyle, les méthacrylamides d'aminoalkyle ;
- les anhydrides carboxyliques porteurs d'une liaison vinylique tels que l'anhydride maléique ou l'anhydride fumarique ;
- les vinylamides tels que la vinylpyrrolidone ou le vinylacétamide ;
- les vinylamines tels que la vinylmorpholine ou la vinylamine ;
- la vinylpyridine ;
- les dérivés hydrophiles du styrène, tels que l'acide styrènesulfonique et ses sels ;
- et les mélanges de deux ou plusieurs d'entre eux.

3. Procédé selon la revendication 1, dans lequel le monomère hydrophobe polymérisable par voie radicalaire est choisi parmi les monomères suivants :
- les dérivés styréniques, tels que le styrène, l'alpha-mèthylstyrène, le *para-*méthylstyrène, le tert-butylstyrène ;
- les esters vinyliques, tels que l'acétate de vinyle, le propionate de vinyle, le butyrate de vinyle, le stéarate de vinyle, le benzoate de vinyle, les esters vinyliques de l'acide versatique,
- les (méth)acrylates d'alkyle en C₁-C₁₂ linéaires ou ramifies ;
- les (méth)acrylates de polyéthylène glycol ;
- l'acrylonitrile et le méthacrylonitrile ;
- les diènes tels que le butadiène ou l'isoprène ;
- et les mélanges de deux ou plusieurs d'entre eux.

4. Procédé selon la revendication 1, dans lequel la quantité de monomère(s) hydrophile(s) est comprise entre 5% et 95% en poids par rapport au poids total de monomère(s), de préférence compris entre 15% et 85%, de préférence encore entre 25% et 75%.

5. Procédé selon la revendication 4, dans lequel les monomères mis en oeuvre sont des monomères hydrophiles tels que l'acide acrylique et Mᵢ, et des monomères hydrophobes tels que le styrène et Mₒ, où Mᵢ représente un monomère hydrophile différent de l'acide acrylique et Mₒ représente un monomère hydrophobe différent du styrène, et où la proportion (acide acrylique + Mᵢ)/(styrène + Mₒ) est comprise entre 5/95 et 95/5 en poids, de préférence compris entre 15/85, de préférence encore entre 25/75, la quantité de Mᵢ étant comprise entre 0 et 99,9% en poids par rapport à la somme des monomères hydrophiles et la quantité de Mₒ étant comprise entre 0 et 99,9% en poids par rapport à la somme des monomères hydrophobes.

6. Procédé selon la revendication 1, dans lequel les monomères mis en oeuvre sont :
- acide acrylique/styrène, en proportion 30/70 à 50/50 en poids ; ou
- acide acrylique/styréne/alpha-méthylstyrène, en proportion ⅓/⅓/⅓ en poids.

7. Procédé selon la revendication 1, dans lequel le solvant est choisi parmi l'eau, les alcools linéaires ou ramifiées, les glycols tels que le diéthylèneglycol et le dipropylèneglycol monométhyléther, le diméthylsulfoxyde, les esters alkyliques, en particulier les acétates d'alkyle, tels qu'entre autres les acétates de butyle ou d'éthyle, les cétones telles que la méthyléthylcétone (MEK), la méthyt-*iso*-butytcétone (MIBK), ainsi que les mélanges de deux ou plusieurs d'entre eux.

8. Procédé selon la revendication 1, dans lequel l'agent RAFT répond à la formule suivante : 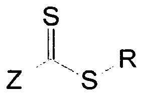 où R est choisi parmi -CH₂R¹, -CHR¹R^{,1} et -CR¹R'¹R"¹, avec R¹, R'¹ et R"¹, identiques ou différents, représentant chacun indépendamment l'un de l'autre, un groupe choisi parmi alkyle éventuellement substitué, un cycle carbocyclique ou hétérocyclique saturé, non saturé ou aromatique, éventuellement substitué, alkylthio éventuellement substitué, groupe alkoxy éventuellement substitué, dialkylamino éventuellement substitué, groupe organométallique, acyle, acyloxy, carboxy (et ses esters et/ou sels), acide sulfonique (et ses sels et ou sulfonates), alkoxy- ou aryloxy-carbonyle, et chaîne polymère préparée par un mécanisme de polymérisation quelconque ;
où Z est choisi parmi hydrogène, halogène (chlore, brome, iode), alkyle éventuellement substitué, aryle éventuellement substitué, hétérocycle éventuellement substitué,-SR², alkoxycarbonyle éventuellement substitué, aryloxycarbonyle éventuellement substitué (-COOR²), carboxy (-COOH), acyloxy (-OCOR²) éventuellement substitué, carbamoyle (-CONHR², -CONR²R³) éventuellement substitué, cyano (-CN), dialkyl- ou diarylphosphonato [-P(=O)OR²₂], dialkyl- ou diaryl-phosphinato [-P(=O)R²₂], chaîne polymère préparée par un mécanisme de polymérisation quelconque, groupe -OR², et groupe -NR²R³,
où R² et R³, identiques ou différents, sont sélectionnés dans le groupe constitué de alkyle en C₁ à C₁₈, alcényle en C₂ à C₁₈, aryle C₆ à C₁₈, hétérocyclyle, aralkyle, alkaryle, chacun de ces groupes pouvant être éventuellement substitués et dans lesquels les substituants sont choisis parmi époxy, hydroxy, alkoxy, acyle, acyloxy, carboxy (et ses esters et/ou sels), acide sulfonique (et ses sels et ou sulfonates), alkoxy- ou aryloxycarbonyle, isocyanato, cyano, silyle, halo et dialkylamino.

9. Procédé selon la revendication 8, dans lequel l'agent RAFT est choisi parmi le trithiocarbonate de dibenzyle (DBTTC) et ses dérivés, et le l'acide (2,2' carbonothioylbis(thio)) propanoique et ses sels, notamment le sel de sodium, de préférence l'agent RAFT étant le DBTTC.

10. Procédé selon la revendication 1, dans lequel l'eau étant ajoutée sous forme d'une solution aqueuse dont le pH est supérieur à 7, avantageusement compris entre 8 et 10, par exemple une solution aqueuse d'ammoniaque ou d'hydroxyde de sodium ou de potassium, le copolymère amphiphile est obtenu et récupéré sous forme de dispersion aqueuse.

11. Procédé selon la revendication 1, dans lequel le copolymère amphiphile obtenu est soumis, avant ou après l'étape de récupération, à un post-traitement visant à modifier les groupements trithiocarbonyle dans le but d'obtenir des produits plus stables vis-à-vis des sources de radicaux.

12. Procédé selon la revendication 1, dans lequel un ou plusieurs masquants d'odeurs ou agents odorisants sont ajoutés pendant la réaction de copolymérisation, ou bien après ladite réaction, ou encore pendant et après ladite réaction de copolymérisation.

## Patentansprüche

1. Verfahren zur Herstellung eines amphiphilen Gradientencopolymers durch kontrollierte radikalische Polymerisation in Gegenwart eines RAFT-Agens (RAFT = Reversible Addition Fragmentation Transfer), das mindestens die folgenden Schritte umfasst:
a) Herstellen eines Reaktionsmediums, das mindestens ein radikalisch polymerisierbares hydrophiles Monomer, mindestens ein radikalisch polymerisierbares hydrophobes Monomer, mindestens ein RAFT-Agens, mindestens einen Initiator und gegebenenfalls mindestens ein Lösungsmittel umfasst;
b) Erhitzen des Reaktionsmediums unter Rühren auf eine Temperatur zwischen 40°C und 150°C;
c) gegebenenfalls Zugeben einer oder mehrerer Portionen Wasser in einer solchen Gesamtmenge, dass der Feststoffgehalt als am Ende der Reaktion gebildetes amphiphiles Copolymer streng über 40 Gew.-% bleibt;
d) Durchführen der Reaktion bis zu einem Umsatzgrad der Monomere von mehr als 80%; und
e) Gewinnen des amphiphilen Copolymers, gegebenenfalls nach Entfernung der Restmonomere und des fakultativen Lösungsmittels bzw. der fakultativen Lösungsmittel.

2. Verfahren nach Anspruch 1, bei dem man das radikalisch polymerisierbare hydrophile Monomer aus den folgenden Monomeren, die spontan hydrophil sind oder durch eine einfache Transformation wie die Quaternisierung eines Amins oder die Neutralisation einer Säure in der Polymerstruktur hydrophil gemacht werden, auswählt:
- ethylenischen Carbonsäuren wie Acrylsäure, Methacrylsäure, Itaconsäure, Fumarsäure, Crotonsäure;
- Acrylaten und Methacrylaten von Polyethylenglykol oder Glykol, die gegebenenfalls an ihrer terminalen Funktion durch Alkyl-, Phosphat-, Phosphonat-, Sulfonatgruppen substituiert sind;
- Amiden von ungesättigten Carbonsäuren wie Acrylamid oder Methacrylamid und deren N-substituierten Derivaten;
- Aminoalkylacrylaten und -methacrylaten, Aminoalkylmethacrylamiden;
- Carbonsäureanhydriden mit einer Vinylbindung wie Maleinsäureanhydrid oder Fumarsäureanhydrid;
- Vinylamiden wie Vinylpyrrolidon oder Vinylacetamid;
- Vinylaminen wie Vinylmorpholin oder Vinylamin;
- Vinylpyridin;
- hydrophilen Styrolderivaten wie Styrolsulfonsäure und deren Salzen;
- und Mischungen von zwei oder mehr davon.

3. Verfahren nach Anspruch 1, bei dem man das radikalisch polymerisierbare hydrophobe Monomer aus den folgenden Monomeren auswählt:
- Styrolderivaten, wie Styrol, alpha-Methylstyrol, para-Methylstyrol, tert.-Butylstyrol;
- Vinylestern, wie Vinylacetat, Vinylpropionat, Vinylbutyrat, Vinylstearat, Vinylbenzoat oder Vinylestern von Versaticsäure;
- linearen oder verzweigten C₁-C₁₂-Alkyl (meth) - acrylaten;
- Polyethylenglykol(meth)acrylaten;
- Acrylnitril und Methacrylnitril;
- Dienen wie Butadien oder Isopren;
- und Mischungen von zwei oder mehr davon.

4. Verfahren nach Anspruch 1, bei dem die Menge an hydrophilem Monomer bzw. hydrophilen Monomeren zwischen 5 und 95 Gew.-%, bezogen auf das Gesamtgewicht des Monomers bzw. der Monomere, vorzugsweise zwischen 15 und 85% und noch weiter bevorzugt zwischen 25 und 75% liegt.

5. Verfahren nach Anspruch 4, bei dem es sich bei den eingesetzten Monomeren um hydrophile Monomere wie Acrylsäure und Mᵢ und hydrophobe Monomere wie Styrol und Mₒ handelt, wobei Mᵢ für ein hydrophiles Monomer, das von Acrylsäure verschieden ist, steht und Mₒ für ein hydrophobes Monomer, das von Styrol verschieden ist, steht, und wobei das Gewichtsverhältnis (Acrylsäure + Mᵢ)/(Styrol + Mₒ) zwischen 5/95 und 95/5, vorzugsweise zwischen 15/85 und noch weiter bevorzugt zwischen 25/75 liegt, wobei die Mᵢ-Menge zwischen 0 und 99,9 Gew.-%, bezogen auf die Summe der hydrophilen Monomere, liegt und die Mₒ-Menge zwischen 0 und 99,9 Gew.-%, bezogen auf die Summe der hydrophoben Monomere, liegt.

6. Verfahren nach Anspruch 1, bei dem es sich bei den eingesetzten Monomeren um
- Acrylsäure/Styrol im Gewichtsverhältnis 30/70 bis 50/50 oder
- Acrylsäure/Styrol/alpha-Methylstyrol im Gewichtsverhältnis ⅓/⅓/⅓
handelt.

7. Verfahren nach Anspruch 1, bei dem man das Lösungsmittel aus Wasser, linearen und verzweigten Alkoholen, Glykolen wie Diethylenglykol und Dipropylenglykolmonomethylether, Dimethylsulfoxid, Alkylestern, insbesondere Essigsäurealkylestern, wie u.a. Essigsäurebutylester oder Essigsäureethylester, Ketonen, wie Methylethylketon (MEK), Methylisobutylketon (MIBK), sowie Mischungen von zwei oder mehr davon auswählt.

8. Verfahren nach Anspruch 1, bei dem das RAFT-Agens der folgenden Formel entspricht: 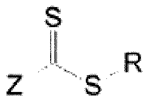 wobei R aus -CH₂R¹, -CHR¹R'¹ und -CR¹R'¹R''¹ ausgewählt ist, wobei R¹, R'¹ und R''¹ gleich oder verschieden sind und jeweils unabhängig voneinander für eine Gruppe stehen, die aus gegebenenfalls substituiertem Alkyl, einem gesättigten, ungesättigten oder aromatischen carbocyclischen oder heterocyclischen Ring, der gegebenenfalls substituiert ist, gegebenenfalls substituiertem Alkylthio, einer gegebenenfalls substituierten Alkoxygruppe, gegebenenfalls substituiertem Dialkylamino, einer metallorganischen Gruppe, Acyl, Acyloxy, Carboxy (und dessen Estern und/oder Salzen), Sulfonsäure (und deren Salzen und/oder Sulfonaten), Alkoxy- oder Aryloxycarbonyl und einer durch einen beliebigen Polymerisationsmechanismus hergestellten Polymerkette ausgewählt ist;
wobei Z aus Wasserstoff, Halogen (Chlor, Brom, Iod), gegebenenfalls substituiertem Alkyl, gegebenenfalls substituiertem Aryl, gegebenenfalls substituiertem Heterocyclyl, -SR², gegebenenfalls substituiertem Alkoxycarbonyl, gegebenenfalls substituiertem Aryloxycarbonyl (-COOR²), Carboxy (-COOH), gegebenenfalls substituiertem Acyloxy (-OCOR²) gegebenenfalls substituiertem Carbamoyl (-CONHR², -CONR²R³), Cyano (-CN), Dialkyl- oder Diarylphosphonato [-P(=O)OR²₂], Dialkyl- oder Diarylphosphinato [-P(=O)R²₂], einer durch einen beliebigen Polymerisationsmechanismus hergestellten Polymerkette, einer -OR²-Gruppe und einer -NR²R³-Gruppe ausgewählt ist,
wobei R² und R³ gleich oder verschieden sind und aus der Gruppe bestehend aus C₁- bis C₁₈-Alkyl, C₂-bis C₁₈-Alkenyl, C₆- bis C₁₈-Aryl, Heterocyclyl, Aralkyl, Alkaryl ausgewählt ist, wobei jede dieser Gruppen gegebenenfalls substituiert ist und wobei die Substituenten aus Epoxy, Hydroxyl, Alkoxy, Acyl, Acyloxy, Carboxyl (und dessen Estern und/oder Salzen), Sulfonsäure (und deren Salzen und/oder Sulfonaten), Alkoxy- oder Aryloxycarbonyl, Isocyanato, Cyano, Silyl, Halogen und Dialkylamino ausgewählt sind.

9. Verfahren nach Anspruch 8, bei dem das RAFT-Agens aus Dibenzyltrithiocarbonat (DBTTC) und dessen Derivaten und 2,2'-[Carbonothioyl-bis(thio)][propionsäure] und deren Salzen, insbesondere dem Natriumsalz, ausgewählt ist, wobei es sich bei dem RAFT-Agens vorzugsweise um DBTTC handelt.

10. Verfahren nach Anspruch 1, bei dem man durch Zugabe des Wassers in Form einer wässrigen Lösung mit einem pH-Wert von mehr als 7, vorteilhafterweise zwischen 8 und 10, beispielsweise einer wässrigen Ammoniak-, Natriumhydroxid- oder Kaliumhydroxidlösung das amphiphile Copolymer in Form einer wässrigen Dispersion erhält und gewinnt.

11. Verfahren nach Anspruch 1, bei dem man das erhaltene amphiphile Copolymer vor oder nach der Gewinnungsstufe einer Nachbehandlung zur Modifizierung der Trithiocarbonylgruppen zwecks Erhalt von Produkten, die gegenüber Radikalquellen stabiler sind, unterwirft.

12. Verfahren nach Anspruch 1, bei dem man während der Copolymerisationsreaktion oder auch danach oder auch während und nach der Copolymerisationsreaktion ein oder mehrere Geruchsmaskierungsmittel oder Odorisierungsmittel zugibt.

## Claims

1. Process for the preparation of an amphiphilic gradient copolymer by Controlled Radical Polymerization, in the presence of a RAFT (Reversible Addition Fragmentation Transfer) agent, comprising at least the following stages:
a) preparation of a reaction medium comprising at least one hydrophilic monomer which can be polymerized by the radical route, at least one hydrophobic monomer which can be polymerized by the radical route, at least one RAFT agent, at least one initiator and optionally at least one solvent;
b) heating the reaction medium with stirring at a temperature of between 40°C and 150°C;
c) optional addition of one or more portions of water, in a total amount such that the level of solid, as amphiphilic copolymer formed at the end of the reaction, remains strictly greater than 40% by weight;
d) carrying out the reaction up to a degree of conversion of the monomers of greater than 80%; and
e) recovery of the amphiphilic copolymer, after optional removal of the residual monomers and of the optional solvent or solvents.

2. Process according to Claim 1, in which the hydrophilic monomer which can be polymerized by the radical route is chosen from the following monomers, which are spontaneously hydrophilic or which a simple conversion, such as the quaternization of an amine or the neutralization of an acid, renders hydrophilic in the polymer structure:
- ethylenic carboxylic acids, such as acrylic acid, methacrylic acid, itaconic acid, fumaric acid or crotonic acid;
- acrylates and methacrylates of polyethylene glycol or of glycol which are substituted or unsubstituted on their end functional group by alkyl, phosphate, phosphonate or sulfonate groups;
- unsaturated carboxamides, such as acrylamide or methacrylamide and their N-substituted derivatives;
- aminoalkyl acrylates and methacrylates, or amino-alkylmethacrylamides;
- carboxylic anhydrides carrying a vinyl bond, such as maleic anhydride or fumaric anhydride;
- vinylamides, such as vinylpyrrolidone or vinylacetamide;
- vinylamines, such as vinylmorpholine or vinylamine;
- vinylpyridine;
- hydrophilic styrene derivatives, such as styrenesulfonic acid and its salts;
- and the mixtures of two or more of them.

3. Process according to Claim 1, in which the hydrophobic monomer which can be polymerized by the radical route is chosen from the following monomers:
- styrene derivatives, such as styrene, α-methylstyrene, para-methylstyrene or tert-butylstyrene;
- vinyl esters, such as vinyl acetate, vinyl propionate, vinyl butyrate, vinyl stearate, vinyl benzoate or vinyl esters of versatic acid;
- linear or branched C₁-C₁₂ alkyl (meth)acrylate;
- polyethylene glycol (meth)acrylate;
- acrylonitrile and methacrylonitrile;
- dienes, such as butadiene or isoprene;
- and the mixtures of two or more of them.

4. Process according to Claim 1, in which the amount of hydrophilic monomer(s) is between 5% and 95% by weight, with respect to the total weight of monomer(s), preferably between 15% and 85% and more preferably between 25% and 75%.

5. Process according to Claim 4, in which the monomers employed are hydrophilic monomers, such as acrylic acid and Mᵢ, and hydrophobic monomers, such as styrene and Mₒ, where Mᵢ represents a hydrophilic monomer other than acrylic acid and Mₒ represents a hydrophobic monomer other than styrene, and where the proportion (acrylic acid + Mᵢ) / (styrene + Mₒ) is between 5/95 and 95/5 by weight, preferably between 15/85, more preferably between 25/75, the amount of Mᵢ being between 0 and 99.9% by weight, with respect to the sum of the hydrophilic monomers, and the amount of Mₒ being between 0 and 99.9% by weight, with respect to the sum of the hydrophobic monomers.

6. Process according to Claim 1, in which the monomers employed are:
- acrylic acid/styrene, in a proportion of 30/70 to 50/50 by weight; or
- acrylic acid/styrene/a-methylstyrene, in a proportion of ⅓/⅓/⅓ by weight.

7. Process according to Claim 1, in which the solvent is chosen from water, linear or branched alcohols, glycols, such as diethylene glycol and dipropylene glycol monomethyl ether, dimethyl sulfoxide, alkyl esters, in particular alkyl acetates, such as, inter alia, butyl acetate or ethyl acetate, ketones, such as methyl ethyl ketone (MEK) or methyl isobutyl ketone (MIBK), and the mixtures of two or more of them.

8. Process according to Claim 1, in which the RAFT agent corresponds to the following formula: 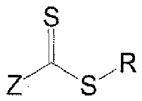 where R is chosen from -CH₂R¹, -CHR¹_{R}' ¹ and -CR¹R'¹R"¹, with R¹, R'¹ and R"¹, which are identical or different, each representing, independently of one another, a group chosen from optionally substituted alkyl, a saturated, unsaturated or aromatic carbocyclic or heterocyclic ring which is optionally substituted, optionally substituted alkylthio, optionally substituted alkoxy group, optionally substituted dialkylamino, organometallic group, acyl, acyloxy, carboxy (and its esters and/or salts), sulfonic acid (and its salts and/or sulfonates), alkoxy- or aryloxycarbonyl, and polymer chain prepared by any polymerization mechanism;
where Z is chosen from hydrogen, halogen (chlorine, bromine, iodine), optionally substituted alkyl, optionally substituted aryl, optionally substituted heterocycle, -SR², optionally substituted alkoxycarbonyl, optionally substituted aryloxycarbonyl (-COOR²), carboxy (-COOH), optionally substituted acyloxy (-OCOR²), optionally substituted carbamoyl (-CONHR², -CONR²R³), cyano (-CN), dialkyl- or diarylphosphonato [-P(=O)OR²₂], dialkyl- or diarylphosphinato [-P(=O)R²₂], polymer chain prepared by any polymerization mechanism, -OR² group and -NR²R³ group,
where R² and R³, which are identical or different, are selected from the group consisting of C₁ to C₁₈ alkyl, C₂ to C₁₈ alkenyl, C₆ to C₁₈ aryl, heterocyclyl, aralkyl, alkaryl, it being possible for each of these groups to be optionally substituted and in which the substituents are chosen from epoxy, hydroxyl, alkoxy, acyl, acyloxy, carboxyl (and its esters and/or salts), sulfonic acid (and its salts and/or sulfonates), alkoxy- or aryloxycarbonyl, isocyanato, cyano, silyl, halo and dialkylamino.

9. Process according to Claim 8, in which the RAFT agent is chosen from dibenzyl trithiocarbonate (DBTTC) and its derivatives, and 2,2'-[carbonothioyl-bis(thio)]bis[propionic acid] and its salts, in particular the sodium salt, the RAFT agent preferably being DBTTC.

10. Process according to Claim 1, in which, the water being added in the form of an aqueous solution having a pH of greater than 7, advantageously of between 8 and 10, for example an aqueous ammonia, sodium hydroxide or potassium hydroxide solution, amphiphilic copolymer is obtained and recovered in the form of an aqueous dispersion.

11. Process according to Claim 1, in which the amphiphilic copolymer obtained is subjected, before or after the stage of recovery, to an aftertreatment targeted at modifying the trithiocarbonyl groups with the aim of obtaining products which are more stable with regard to sources of radicals.

12. Process according to Claim 1, in which one or more odor masking products or odorants are added during the copolymerization reaction, or else after said reaction, or alternatively during and after said copolymerization reaction.
